(19) **Europäisches Patentamt / European Patent Office / Office européen des brevets**

(11) **EP 2 862 770 B1**

(12) **EUROPEAN PATENT SPECIFICATION**

(45) Date of publication and mention
of the grant of the patent:
**31.10.2018 Bulletin 2018/44**

(21) Application number: **14184680.8**

(22) Date of filing: **12.09.2014**

(51) Int Cl.:
**B60W 30/19** (2012.01)   **B60W 20/00** (2016.01)
**B60W 10/02** (2006.01)   **B60W 10/06** (2006.01)
**B60W 10/08** (2006.01)   **B60K 6/48** (2007.10)

(54) **Method to control a hybrid vehicle during a gear shift phase**

Verfahren zur Steuerung eines Hybridfahrzeugs während einer Gangschaltphase

Procédé pour commander un véhicule hybride au cours d'une phase de changement de vitesse

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2013 IT BO20130484**

(43) Date of publication of application:
**22.04.2015 Bulletin 2015/17**

(73) Proprietor: **Magneti Marelli S.p.A.**
**Corbetta (MI) (IT)**

(72) Inventors:
• **Benassi, Daniele**
**40138 BOLOGNA (IT)**

• **Leoni, Andrea**
**06126 PERUGIA (IT)**
• **Monacelli, Francesco**
**06023 GUALDO TADINO (IT)**
• **Zanotti, Massimo**
**40040 VADO (IT)**

(74) Representative: **Maccagnan, Matteo et al**
**Studio Torta S.p.A.**
**Via Viotti, 9**
**10121 Torino (IT)**

(56) References cited:
**EP-A1- 2 014 499      FR-A1- 2 907 409**
**US-A1- 2008 051 248**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 862 770 B1

## Description

TECHNICAL FIELD

The present invention relates to a method to control a hybrid vehicle during a gear shift phase.

PRIOR ART

Hybrid vehicles are increasingly widespread; they comprise an internal combustion engine, which transmits torque to the drive wheels by means of a servo-assisted transmission provided with a servo-assisted mechanical gearbox, a servo-assisted clutch and at least one electrical machine, which is electrically connected to an electrical storage system and is mechanically connected to the drive wheels.

Typically, the electrical machine is of the reversible type, i.e. may function either as a motor by drawing electrical energy and generating mechanical work, or as a generator by drawing mechanical work and generating electrical energy, and is driven by an electrical actuator system connected to the electrical storage system adapted to store electrical energy. The electrical machine is typically fitted on a layshaft of the servo-assisted mechanical gearbox and is driven so as to replace the internal combustion engine, e.g. when the servo-assisted clutch remains open; in other words, when the servo-assisted clutch is open, the electrical machine draws energy from the storage system to generate a driving torque which is equivalent to the driving torque generated by the internal combustion engine. However, in this configuration, the electric motor cannot perform some functions (typically, it cannot act as a starter motor for the internal combustion engine), and it is in an unfavorable condition for performing other functions.

For this reason, a servo-assisted transmission has been suggested, comprising a connection device which is adapted either to connect a shaft of the reversible electrical machine to an input shaft of the servo-assisted mechanical gearbox, or to connect the shaft of the reversible electrical machine to the layshaft of the servo-assisted mechanical gearbox, or to keep the shaft of the reversible electrical machine idle (i.e. connected to neither the input shaft nor to the layshaft).

In this configuration, the reversible electrical machine may be used as a starter motor for starting the internal combustion engine when the shaft of the reversible electrical machine is connected to the input shaft of the servo-assisted mechanical gearbox.

However, the above-described hybrid vehicles have some critical issues. In particular, during the normal operation of the hybrid vehicle, an interruption in the transmission of driving torque to the drive wheels during a gear shift due to the opening position of the servo-assisted clutch is clearly recognized by the driver, who perceives a sharp reduction in vehicle acceleration.

To solve the aforementioned problem, document EP-A-2014499 describes a hybrid vehicle wherein the reversible electric machine is requested to generate/use a mechanical torque which depends on the desired law of motion of the car, such a desired law of motion normally contemplating the absence of relevant discontinuity in accelerations/decelerations.

Anyway, for the hybrid vehicles realized according to EP-A-2014499 it is extremely critical to define how to control both the reversible electrical machine and the internal combustion engine to achieve the objective acceleration/deceleration profile in every driving condition and, in particular, during a gear shift phase.

DESCRIPTION OF THE INVENTION

It is the object of the present invention to provide a method to control a hybrid vehicle during a gear shift phase which is free from the drawbacks of the prior art and which is easy and cost-effective to be implemented.

According to the present invention, a method to control a hybrid vehicle during a gear shift phase is provided as claimed in the appended claims.

BRIEF DESCRIPTION OF THE DRAWINGS

The present invention will now be described with reference to the accompanying drawing, which shows a non-limitative embodiment thereof, in which the attached figure is a diagrammatic view of a servo-assisted transmission for a hybrid vehicle which implements the control method according to the present invention.

PREFERRED EMBODIMENTS OF THE INVENTION

In the attached figure, numeral 1 indicates as a whole a servo-assisted transmission for a hybrid vehicle propelled by an internal combustion engine 2, which is provided with a driving shaft 3, which rotates at an angular speed $\omega_m$. In particular, it is a vehicle with hybrid engine and parallel architecture.

The servo-assisted transmission 1 comprises a servo-assisted mechanical gearbox 4, which is provided with an input shaft 5, which rotates at an angular speed $\omega_1$ and is connectable to the driving shaft 3 by means of a servo-assisted clutch 6, and a layshaft 7, which rotates at an angular speed $\omega_2$ and is connected to a differential 8, which transmits motion to the drive wheels by means of two axle shafts 9.

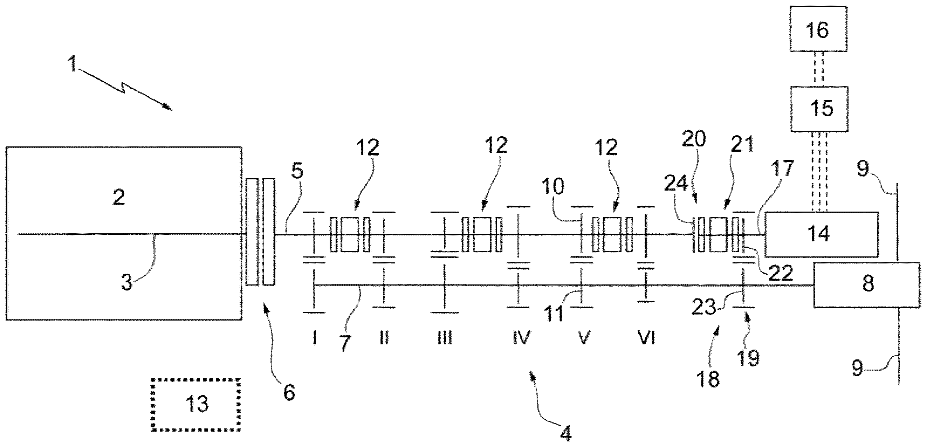

The servo-assisted gearbox 4 shown in figure 1 comprises six forward gears indicated by Roman numerals (first gear I, second gear II, third gear III, fourth gear IV, fifth gear V and sixth gear VI). The input shaft 5 and the layshaft 7 are mechanically coupled to each other by means of a plurality of gear pairs, each of which defines a respective gear and comprises a primary gear 10 mounted to the input shaft 5 and a secondary gear 11 mounted to layshaft 7.

Each primary gear 10 is idly mounted to the input shaft 5 and always meshes with the respective secondary gear 11; instead, each secondary gear 11 is fitted on layshaft 7 to integrally rotate with the layshaft 7 itself. The servo-assisted mechanical gearbox 4 further comprises three synchronizers 12, each of which is coaxially mounted to the input shaft 5, is arranged between two primary gears 10, and is adapted to be actuated to engage the two primary gears 10 onto the input shaft 5 alternately (i.e. to alternately make the two primary gears 10 angularly integral with the input shaft 5). In other words, each synchronizer 12 may be displaced either in one direction to engage a primary gear 10 onto the input shaft 5, or in the other direction to engage the other primary gear 10 onto the input shaft 5.

The servo-assisted mechanical gearbox 4 is actuated by a hydraulic servo-control to drive the synchronizers 12 so as to engage and disengage the gears; the servo-controlled clutch 6 is also actuated by a hydraulic servo-control to connect and disconnect the driving shaft 3 to/from the input shaft 5. The servo-assisted transmission 1 comprises a control unit 13 (diagrammatically shown), which drives the hydraulic servo-controls of servo-assisted mechanical gearbox 4 and servo-assisted clutch 6.

According to a different embodiment (not shown and perfectly equivalent to the above-described embodiment), the primary gears 10 are fitted onto the input shaft 5, the secondary gears 11 are idly mounted to layshaft 7, and the synchronizers 12 are mounted to layshaft 7 for engaging the secondary gears 11 onto the layshaft 7 itself.

The servo-assisted transmission 1 further comprises a reversible electrical machine 14 (i.e. which may function either as a motor by drawing electrical current and generating mechanical work, or as a generator by drawing mechanical work and generating electrical energy) driven by an electrical actuator 15 connected to at least one battery 16 adapted to store electrical energy.

The reversible electrical machine 14 comprises a shaft 17, which is integral with a rotor of the reversible electrical machine 14, is normally idle (i.e. mechanically connected in a permanent manner neither to the input shaft 5 nor to the layshaft 7), and is mechanically connectable to the input shaft 5.

The servo-assisted transmission 1 comprises a connection device 18 adapted either to connect the shaft 17 of the reversible electrical machine 14 to the input shaft 5 of the servo-assisted mechanical gearbox 4, or to connect the shaft 17 of the reversible electrical machine 14 to the layshaft 7 of the servo-assisted mechanical gearbox 4, or to keep the shaft 17 of the reversible electrical machine 14 idle (i.e. connected neither to the input shaft 5, nor to the layshaft 7).

According to the preferred embodiment shown in the attached figures, the connection device 18 comprises a gear transmission 19 interposed between the shaft 17 of the reversible electrical machine 14 and the layshaft 7 of the servo-assisted mechanical gearbox 4, a direct drive transmission 20 interposed between the shaft 17 of the reversible electrical machine 14 and the input shaft 5, and a synchronizer 21 adapted to alternately engage either the gear transmission 19 or the direct drive transmission 20.

The gear transmission 19 preferably has a non-unitary transmission ratio and comprises a gear 22 idly mounted to the shaft 17 of the reversible electrical machine 14 and a gear 23 which is fitted onto layshaft 7 and permanently meshes with gear 22; the synchronizer 21 is adapted to engage the gear 22 onto the shaft 17 of the reversible electrical machine 14 to connect the shaft 17 of the reversible electrical machine 14 to layshaft 7. The value of the non-unitary transmission ratio of the gear transmission 19 is such as to optimize the revolutions per minute and torque values of the reversible electrical machine 14 with respect to the revolutions per minute and torque transmitted by layshaft 7; the gear transmission 19 normally includes a reduction of revolutions per minute, i.e. the reversible electrical machine 14 turns slower than layshaft 7.

The direct drive transmission 20 has a unitary transmission ratio and comprises a connection element 24 fitted onto the input haft 5; the synchronizer 21 is adapted to engage the connection element 24 onto the shaft 17 of the reversible electrical machine 14 in order to connect the shaft 17 of the reversible electrical machine 14 to the input shaft 5.

According to a different embodiment (not shown), the direct drive transmission 20 is replaced by a further gear transmission, which is interposed between the shaft 17 of the reversible electrical machine 14 and the input shaft 5, has a non-unitary transmission ratio and is entirely similar to the gear transmission 19. Also in this case, the value of the non-unitary transmission ratio of the further gear transmission 19 is such as to optimize the revolutions per minute and torque values of the reversible electrical machine 14 with respect to the revolutions per minute and torque transmitted by the input shaft 5; the further gear transmission 19 normally includes a reduction of revolutions per minute, i.e. the reversible electrical machine 14 rotates slower than the input shaft 5.

In use, when there is no gear shift and the vehicle is traveling (i.e. the internal combustion engine 2 is running and the servo-assisted clutch 6 is closed), the shaft 17 of the reversible electrical machine 14 is normally connected to the input shaft 5 and the reversible electrical machine 14 works as a generator of electrical energy to deliver the electrical energy required by the electrical loads of the vehicle. If the vehicle slows down, the reversible electrical machine 14 may maximize (compatibly with the charge state of battery 16 and the vehicle dynamics) the draw of mechanical energy to obtain a regenerative braking of the vehicle.

In use, when the driving torque C necessary to the drive wheels is generated by the internal combustion engine 2 while an increase of driving torque C to be delivered to the drive wheels is requested by the driver, the reversible electrical machine 14 is set to function as an electric motor by drawing electrical energy from battery 16 to deliver a supplementary driving torque ("electric boost"). In other words, the reversible electrical machine 14 is set to function as a generator of electrical energy to deliver the electrical energy needed to satisfy the increase of driving torque C to be delivered to the drive wheels requested by the driver.

The control mode implemented by the control unit 13 when there is a gear shift and the vehicle is traveling, i.e. when the internal combustion engine 2 is running and the servo-assisted clutch 6 is open, is described below.

The shaft 17 of the reversible electrical machine 14 is normally connected to the input shaft 5 and the reversible electrical machine 14 works as a generator of electrical energy to deliver the electrical energy required by the electrical loads of the vehicle.

The control unit 13 is set to recognize when there is an interruption in the transmission of driving torque C to the drive wheels during a gear shift due to the opening position of the servo-assisted clutch 6. Typically, this "hole" in the delivery of driving torque C is clearly recognized by the driver, who perceives a reduction of the vehicle acceleration.

The control unit 13 is set to determine an objective acceleration profile $A_{obj}$ (or objective deceleration profile $A_{obj}$) to be achieved during the entire amount of time in which there is an interruption in the transmission of driving torque C to the drive wheels during a gear shift due to the opening position of the servo-assisted clutch 6.

The control unit 13 is thus set to determine an objective driving torque $C_{m-obj}$ that is such as to ensure the achievement of the objective acceleration profile $A_{obj}$ during the entire amount of time in which there is an interruption in the transmission of driving torque C to the drive wheels during a gear shift due to the opening position of the servo-assisted clutch 13.

The control unit 13 is thus set to control the reversible electrical machine 14 so that it works as a generator of driving torque to deliver the electrical energy needed according to the following formula:

$$C_{tot\_e} = \Delta E(C_{m\_obj}) + C_e \qquad [1]$$

where:

$C_e$: electrical energy delivered by the reversible electrical machine 14 for the operation of the electrical loads of the hybrid vehicle in the instant in which there is an interruption in the transmission of driving torque C to the drive wheels during a gear shift due to the opening position of the servo-assisted clutch 6;
$\Delta E(C_{m\_obj})$: supplementary electrical energy delivered by the reversible electrical machine 14 to ensure the objective driving torque $C_{m-obj}$ which allows to achieve the objective acceleration profile $A_{obj}$ during the entire amount of time in which there is an interruption in the transmission of driving torque C to the drive wheels during a gear shift due to the opening position of the servo-assisted clutch 6; and
$E_{tot}$: total electrical energy required from the reversible electrical machine 14 in the instant in which there is an interruption in the transmission of the driving torque C to the drive wheels during a gear shift due to the opening position of the servo-assisted clutch 6.

The control unit 13 is obviously set to check that the charge state of battery 16 is such as to ensure the delivery of the supplementary electrical energy $\Delta E(C_{m\_obj})$ which allows to achieve the objective driving torque $C_{m\_obj}$ which allows to achieve the objective acceleration profile $A_{obj}$ during the entire amount of time in which there is an interruption in the transmission of driving torque C to the drive wheels during a gear shift.

In other words, the control unit 13 is set to check that the charge state of battery 16 is sufficient to deliver the total electrical energy $E_{tot}$ required from the reversible electrical machine 14 in the instant in which there is an interruption in the transmission of driving torque C to the drive wheels during a gear shift, i.e. that is such as to ensure both the delivery of the supplementary electrical energy $\Delta E(C_{m\_obj})$ to ensure the objective driving torque $C_{m-obj}$ to the drive wheels and to satisfy the requests of the electrical loads of the hybrid vehicle.

According to a first variant, if the result of this check is negative (i.e. if the charge state of battery 16 is not sufficient to deliver the total electrical energy $E_{tot}$ required from the reversible electrical machine 14 in the instant in which there is an interruption in the transmission of driving torque C to the drive wheels during a gear shift, i.e. to ensure both the delivery of the supplementary electrical energy $\Delta E(C_{m\_obj})$ to ensure the objective driving torque $C_{m\_obj}$ to the drive wheels and the delivery to satisfy the requests of the electrical loads of the hybrid vehicle), then the control unit 13 is set to control the reversible electrical machine 14 so that it works as an electrical energy generator to only provide the electrical energy needed to satisfy the requests of the electrical loads of the hybrid vehicle.

In other words, if the result of the check is negative (i.e. if the charge state of battery 16 is not sufficient to deliver the total electrical energy $E_{tot}$ required from the reversible electrical machine 14 and is such as to ensure both the delivery of the supplementary electrical energy $\Delta E(C_{m\_obj})$ to ensure the objective driving torque $C_{m-obj}$ to the drive wheels and the delivery to satisfy the requests of the electrical loads of the hybrid vehicle), then the objective driving torque $C_{m-obj}$ will not be transmitted to the drive wheels.

According to an alternative, if the result of this check is negative (i.e. if the charge state of battery 16 is not sufficient to deliver the total electrical energy $E_{tot}$ required from the reversible electrical machine 14 in the instant in which there is an interruption in the transmission of driving torque C to the drive wheels during a gear shift, i.e. to ensure both the delivery of the supplementary electrical energy $\Delta E(C_{m\_obj})$ to ensure the objective driving torque $C_{m\_obj}$ to the drive wheels and the delivery to satisfy the requests of the electrical loads of the hybrid vehicle), then the control unit 13 is set to control the reversible electrical machine 14 so that it works as a generator of electrical energy to supply in all cases the available electrical energy $E_{av}$ at the moment, the value of which will be lower than the supplementary electrical energy $\Delta E(C_{m\_obj})$ to ensure the objective driving torque $C_{m-obj}$ and will not allow to achieve the objective acceleration profile $A_{obj}$ but in all cases will allow the driver to not perceive an abrupt decrease in vehicle acceleration.

Instead, if the result of the check is positive (i.e. if the charge state of battery 16 is sufficient to deliver the total electrical energy $E_{tot}$ required from the reversible electrical machine 14 in the instant in which there is an interruption in the transmission of driving torque C to the drive wheels during a gear shift, i.e. to ensure both the delivery of the supplementary electrical energy $\Delta E(C_{m\_obj})$ to ensure the objective driving torque $C_{m-obj}$ to the drive wheels and the delivery to satisfy the requests of the electrical loads of the hybrid vehicle), then the control unit 13 is set to control the reversible electrical machine 14 so that it works as a generator of electrical energy to deliver the total electrical energy $E_{tot}$.

In yet other words, if the result of the check is positive (i.e. if the charge state of battery 16 is sufficient to deliver the total electrical energy $E_{tot}$ required from the reversible electrical machine 14 and is such as to ensure both the delivery of the supplementary electrical energy $\Delta E(C_{m\_obj})$ to ensure the objective driving torque $C_{m\_obj}$ to the drive wheels and the delivery to satisfy the requests of the electrical loads of the hybrid vehicle), the objective driving torque $C_{m-obj}$ is delivered by the reversible electrical machine 14 to the drive wheels.

It is worth noting that the actuation of the reversible electrical machine 14 is nearly immediate and it is possible to deliver the objective driving torque $C_{m-obj}$ necessary to achieve the objective acceleration profile $A_{obj}$ with a substantially negligible transient.

It is apparent that the method described so far can be advantageously applied during an up-shift, i.e. when shifting to a gear with a higher transmission ratio (e.g. from first gear I to second gear II), and during a down-shift, i.e. when shifting to a gear with a lower transmission ratio (e.g. from second gear II to first gear I).

An objective driving torque $C_{m\_obj}$ to be transmitted to the drive wheels will obviously be required in case of an up-shift, i.e. when shifting to a gear with a higher transmission ratio (e.g. from first gear I to second gear II).

In case of a down-shift, instead, i.e. when shifting to a gear with a lower ratio (e.g. from second gear II to first gear I) either the request for an objective driving torque $C_{m\_obj}$ to be transmitted to the drive wheels or the request for an objective braking torque $C_{f\_obj}$ may occur (e.g. in case of a deceleration).

In case of vehicle deceleration, the reversible electrical machine 14 maximizes the draw of mechanical energy to make a regenerative braking of the vehicle (compatibly with the charge state of battery 16 and the vehicle dynamics). During the forward travel of the vehicle, the control unit 13 detects a deceleration state of the hybrid vehicle and, in response to the detection of the deceleration state of the vehicle, actuates the reversible electrical machine 14 as a generator to regenerate part of the kinetic energy possessed by the hybrid vehicle itself. Typically, the deceleration state of the vehicle is firstly detected when the driver lifts his/her foot from the accelerator pedal and/or when the internal combustion engine 2 (in case of thermal propulsion) is in a cut-off phase (i.e. does not produce any torque) for a given interval of time (typically a few seconds) and/or similarly when the reversible electrical machine 14 (in case of electrical propulsion) does not produce any driving torque for a given interval of time (typically a few seconds). Alternatively, the deceleration state of the vehicle may be recognized when the driver presses the brake pedal with his/her foot.

The control unit 13 is thus set to determine the objective braking torque $C_{f\_obj}$ that is such as to ensure the achievement of the objective deceleration profile $A_{obj}$ during the entire amount of time in which there is an interruption in the transmission of driving torque C to the drive wheels during a gear shift due to the opening position of the servo-assisted clutch 6.

In particular, the control unit 13 is set to check that the charge state of battery 16 is such as to ensure the delivery of the available objective braking torque $C_{f\_obj}$ to the axle of the electrical machine 14. In other words, the control unit 13 is set to check that the charge state of battery 16 is sufficient for the reversible electrical machine 14 to maximize the draw of mechanical energy to obtain a regenerative braking of the vehicle.

If the result of this check is negative (i.e. if the charge state of battery 16 is not sufficient to ensure the draw of the objective braking torque $C_{f\_obj}$), then the control unit 13 is set to boost a braking torque generated by a braking system.

In other words, if the result of the check is negative (i.e. if battery 16 is already sufficiently charged and it is not possible to ensure the draw of a further objective braking torque $C_{f\_obj}$), then the reversible electrical machine 14 is controlled to draw a braking torque which is lower than the objective braking torque $C_{f\_obj}$.

Instead, if the result of the check is positive (i.e. if the charge state of battery 16 is sufficient to ensure the draw of the objective braking torque $C_{f\_obj}$), then the control unit 13 is set to control the reversible electrical machine 14 so that is works as a generator to draw the objective braking torque $C_{f\_obj}$.

As mentioned above, the control unit 13 is set to determine an objective acceleration profile $A_{obj}$ (or an objective deceleration profile $A_{obj}$) to be achieved during the entire period in which there is an interruption in the transmission of driving torque C to the drive wheels; such an objective acceleration profile $A_{obj}$ (or objective deceleration profile $A_{obj}$) is variable as a function of a plurality of parameters and may be expressed as follows:

$$A_{obj} = f \ (A_i \ , \ v_i, \ k) \ [2]$$

where

$A_{obj}$: objective acceleration profile;
$v_i$: speed of the hybrid vehicle in the instant in which there is an interruption in the transmission of driving torque C to the drive wheels during a gear shift;
$A_i$: acceleration of the hybrid vehicle in the instant in which there is an interruption in the transmission of driving torque C to the drive wheels during a gear shift; and
k: dynamics to be given to the hybrid vehicle (i.e. chosen from the various possible objective acceleration/deceleration profiles: constant objective acceleration profile $A_{obj}$, objective acceleration profile $A_{obj}$ equal to zero and constant speed, objective acceleration profile $A_{obj}$ with a reduced torque C hole, etc.).

It is worth noting that the acceleration value $A_i$ of the hybrid vehicle in the instant in which there is an interruption in the transmission of driving torque C to the drive wheels during a gear shift may be obtained by means of an acceleration sensor which is present aboard the hybrid vehicle and/or by calculating the first time derivative of the speed v of the hybrid vehicle.

According to a different embodiment (not shown), the connection device 18 comprises a pair of clutches, which replace the synchronizer 21 and which are interposed between the shaft 17 of the reversible electrical machine 14 and the input shaft 5 and the layshaft 7, respectively.

The method to control a hybrid vehicle described so far has the advantage of allowing the reversible electrical machine 14 to obtain the objective driving torque $C_{m-obj}$ or the objective braking torque $C_{f\_obj}$ to the drive wheels with a substantially negligible transient and always under the most favorable conditions, i.e. so as to optimize fuel consumption, reduce polluting emissions and prevent the driver from perceiving a reduction of the vehicle acceleration and perceive the torque hole which occurs during an interruption in the transmission of driving torque C to the drive wheels during a gear shift due to the opening position of the servo-assisted clutch 6. The method to control a hybrid vehicle described so far allows the gear shift phase to be substantially transparent to the driver (i.e. perceived in a reduced manner).

## Claims

1. A method to control a parallel architecture hybrid vehicle provided with an internal combustion engine (2), a servo-assisted transmission (1) provided, in turn, with a servo-assisted mechanical gearbox (4) and a servo-assisted clutch (6), and a reversible electrical machine (14) suited to generate a driving torque (C) to be transmitted to the drive wheels and connected to a storage system (16) adapted to store electrical energy;
the method comprises the steps of:

recognizing an interruption in the transmission of driving torque (C) to the drive wheels during a gear shift due to the opening position of the servo-assisted clutch (6);
determining an objective acceleration/deceleration profile ($A_{obj}$) to be achieved during the entire amount of time in which there is an interruption in the transmission of driving torque (C) to the drive wheels during a gear shift due to the opening position of the servo-assisted clutch (6);
calculating an objective driving/breaking torque ($C_{m\_obj}$, $C_{f\_obj}$) that is such as to ensure the achievement of the objective acceleration/deceleration profile ($A_{obj}$) during the entire amount of time in which there is an interruption in the transmission of driving torque (C) to the drive wheels during a gear shift due to the opening position of the servo-assisted clutch (6); and
controlling the reversible electrical machine (14) so as to deliver to the drive wheels the objective driving/breaking torque ($C_{m\_obj}$, $C_{f\_obj}$) that is such as to ensure the achievement of the objective acceleration/deceleration profile ($A_{obj}$) during the entire amount of time in which there is an interruption in the transmission of driving torque (C) to the drive wheels during a gear shift due to the opening position of the servo-assisted clutch (6);
the method is **characterized in that** it comprises the further steps of:

learning the charge state of the storage system (16); and
controlling the reversible electrical machine (14) so as to deliver to the drive wheels the objective driving/breaking torque ($C_{m\_obj}$, $C_{f\_obj}$) only if the charge state of the storage system (16) is sufficient to deliver the objective driving/breaking torque ($C_{m\_obj}$, $C_{f\_obj}$) that is such as to ensure the achievement of the objective acceleration/deceleration profile ($A_{obj}$) during the entire amount of time in which there is an interruption in the transmission of driving torque (C) to the drive wheels during a gear shift due to the opening position of the servo-assisted clutch (6).

2. A control method according to claim 1, wherein the objective acceleration/deceleration profile (A_obj) to be achieved during the entire amount of time in which there is an interruption in the transmission of driving torque (C) to the drive wheels during a gear shift is expressed by the following formula:

$$A_{obj} = f(A_i, v_i, k) [2]$$

where

A_obj: objective acceleration profile;
v_i: speed of the hybrid vehicle in the instant in which there is an interruption in the transmission of driving torque (C) to the drive wheels during a gear shift;
A_i: acceleration of the hybrid vehicle in the instant in which there is an interruption in the transmission of driving torque (C) to the drive wheels during a gear shift; and
k: dynamics to be given to the hybrid vehicle.

3. A control method according to claim 2, wherein the dynamics (k) to be given to the hybrid vehicle is chosen from various possible objective acceleration/deceleration profiles (A_obj): constant objective acceleration/deceleration profile (A_obj), objective acceleration/deceleration profile (A_obj) equal to zero and constant speed, objective acceleration/deceleration profile (A_obj) with a reduced driving torque (C) hole.

**Patentansprüche**

1. Verfahren zur Steuerung eines Hybridfahrzeugs mit Parallelarchitektur, umfassend eine Brennkraftmaschine (2), ein Servogetriebe (1), das wiederum ein mechanisches Servogetriebe (4) und eine Servokupplung (6) umfasst, und eine umkehrbare elektrische Maschine, die dazu dient, ein auf die Antriebsräder zu übertragendes Antriebsmoment (C) zu erzeugen, und die mit einem Speichersystem (16) zur Speicherung elektrischer Energie verbunden ist; wobei das Verfahren folgende Schritte umfasst:

Erkennen einer Unterbrechung der Übertragung des Antriebsmoments (C) auf die Antriebsräder während einer Gangschaltung aufgrund der Öffnungsposition der Servokupplung (6); Bestimmen eines Ziel-Beschleunigungs-/Verzögerungsprofils (A_obj), das während des gesamten Zeitraums zu erreichen ist, in dem während einer Gangschaltung aufgrund der Öffnungsposition der Servokupplung (6) eine Un-

terbrechung der Übertragung des Antriebsmoments (C) auf die Antriebsräder besteht; und Berechnen eines Ziel-Antriebs-/Bremsmoments (C_{m_obj}, C_{f_obj}), das so bemessen ist, dass das Ziel-Beschleunigungs-/Verzögerungsprofil (A_obj) während des gesamten Zeitraums erreicht wird, in dem während einer Gangschaltung aufgrund der Öffnungsposition der Servokupplung (6) eine Unterbrechung der Übertragung des Antriebsmoments (C) auf die Antriebsräder besteht; und Steuern der umkehrbaren elektrischen Maschine (14), so dass ein Ziel-Antriebs-/Bremsmoment (C_{m_obj}, C_{f_obj}) an die Antriebsräder geliefert wird, das so bemessen ist, dass das Ziel-Beschleunigungs-/Verzögerungsprofil (A_obj) während des gesamten Zeitraums erreicht wird, in dem während einer Gangschaltung aufgrund der Öffnungsposition der Servokupplung (6) eine Unterbrechung der Übertragung des Antriebsmoments (C) auf die Antriebsräder besteht; wobei das Verfahren **dadurch gekennzeichnet ist, dass** es folgende weitere Schritte umfasst: Feststellen des Ladezustands des Speichersystems (16), und Steuern der umkehrbaren elektrischen Maschine (14), so dass das Ziel-Antriebs-/Bremsmoment (C_{m_obj}, C_{f_obj}) nur dann an die Antriebsräder geliefert wird, wenn der Ladezustand des Speichersystems (16) ausreicht, ein Ziel-Antriebs-/Bremsmoment (C_{m_obj}, C_{f_obj}) an die Antriebsräder zu liefern, das so bemessen ist, dass das Ziel-Beschleunigungs-/Verzögerungsprofil (A_obj) während des gesamten Zeitraums erreicht wird, in dem während einer Gangschaltung aufgrund der Öffnungsposition der Servokupplung (6) eine Unterbrechung der Übertragung des Antriebsmoments (C) auf die Antriebsräder besteht.

2. Steuerverfahren nach Anspruch 1, wobei das Ziel-Beschleunigungs-/Verzögerungsprofil (A_obj), das während des gesamten Zeitraums, in dem während einer Gangschaltung aufgrund der Öffnungsposition der Servokupplung (6) eine Unterbrechung der Übertragung des Antriebsmoments (C) auf die Antriebsräder besteht, zu erreichen ist, durch folgende Gleichung ausgedrückt wird:

$$A_{obj} = f(A_i, v_i, k) [2]$$

wobei

A_obj: das Ziel-Beschleunigungsprofil ist;
v_i: die Geschwindigkeit des Hybridfahrzeugs in dem Moment ist, in dem während einer Gangschaltung eine Unterbrechung der Übertragung des Antriebsmoments (C) auf die Antriebsräder besteht;

A$_i$: die Beschleunigung des Hybridfahrzeugs in dem Moment ist, in dem während einer Gangschaltung eine Unterbrechung der Übertragung des Antriebsmoments (C) auf die Antriebsräder besteht; und

k: die an das Hybridfahrzeug übertragene Dynamik ist.

3. Steuerverfahren nach Anspruch 2, wobei die an das Hybridfahrzeug übertragene Dynamik (k) aus verschiedenen möglichen Ziel-Beschleunigungs-/Verzögerungsprofilen (A$_{obj}$) ausgewählt wird: konstantes Ziel-Beschleunigungs-/Verzögerungsprofil (A$_{obj}$), Ziel-Beschleunigungs-/Verzögerungsprofil (A$_{obj}$) gleich null und konstanter Geschwindigkeit, Ziel-Beschleunigungs-/Verzögerungsprofil (A$_{obj}$) mit einem verkürzten Antriebsmoment-(C)-Loch.

**Revendications**

1. Procédé pour commander un véhicule hybride à architecture parallèle pourvu d'un moteur à combustion interne (2), d'une transmission servo-assistée (1) pourvue, quant à elle, d'une boîte de vitesses mécanique servo-assistée (4) et d'un embrayage servo-assisté (6), et d'une machine électrique réversible (14) appropriée pour générer un couple d'entraînement (C) à transmettre aux roues motrices et reliée à un système de stockage (16) adapté pour stocker de l'énergie électrique ;

le procédé comprend les étapes consistant à :

reconnaître une interruption dans la transmission de couple d'entraînement (C) aux roues motrices durant un changement de vitesse en raison de la position d'ouverture de l'embrayage servo-assisté (6) ;

déterminer un profil d'accélération/décélération objectif (A$_{obj}$) à réaliser pendant toute la durée pendant laquelle il y a une interruption dans la transmission de couple d'entraînement (C) aux roues motrices durant un changement de vitesse en raison de la position d'ouverture de l'embrayage servo-assisté (6) ;

calculer un couple d'entraînement/freinage objectif (C$_{m\_obj}$, C$_{f\_obj}$) qui est tel qu'il permet d'assurer la réalisation du profil d'accélération/décélération objectif (A$_{obj}$) pendant toute la durée pendant laquelle il y a une interruption dans la transmission de couple d'entraînement (C) aux roues motrices pendant un changement de vitesse en raison de la position d'ouverture de l'embrayage servo-assisté (6) ; et

commander la machine électrique réversible (14) de manière à distribuer aux roues motrices le couple d'entraînement/freinage objectif (C$_{m\_obj}$, C$_{f\_obj}$) qui est tel qu'il permet d'assurer la réalisation du profil d'accélération/décélération objectif (A$_{obj}$) pendant toute la durée pendant laquelle il y a une interruption dans la transmission de couple d'entraînement (C) aux roues motrices durant un changement de vitesse en raison de la position d'ouverture de l'embrayage servo-assisté (6) ;

le procédé est **caractérisé en ce qu'il** comprend les étapes supplémentaires consistant à :

apprendre l'état de charge du système de stockage (16) ; et

commander la machine électrique réversible (14) de manière à distribuer aux roues matrices le couple d'entraînement/freinage objectif (C$_{m\_obj}$, C$_{f\_obj}$) uniquement si l'état de charge du système de stockage (16) est suffisant pour distribuer le couple d'entraînement/freinage objectif (C$_{m\_obj}$, C$_{f\_obj}$) qui est tel qu'il permet d'assurer la réalisation du profil d'accélération/décélération objectif (A$_{obj}$) pendant toute la durée pendant laquelle il y a une interruption dans la transmission de couple d'entraînement (C) aux roues motrices durant un changement de vitesse en raison de la position d'ouverture de l'embrayage servo-assisté (6).

2. Procédé de commande selon la revendication 1, dans lequel le profil d'accélération/décélération objectif (A$_{obj}$) à réaliser pendant toute la durée pendant laquelle il y a une interruption dans la transmission de couple d'entraînement (C) aux roues motrices durant un changement de vitesse est exprimé par la formule suivante :

$$A_{obj} = f \ (A_i, \ v_i, \ k) \ [2]$$

où

A$_{obj}$ : profil d'accélération objectif ;

v$_i$ : vitesse du véhicule hybride au moment où il y a une interruption dans la transmission de couple d'entraînement (C) aux roues motrices durant un changement de vitesse ;

A$_i$ : accélération du véhicule hybride au moment où il y a une interruption dans la transmission de couple d'entraînement (C) aux roues motrices durant un changement de vitesse ; et

k : dynamique à donner au véhicule hybride.

3. Procédé de commande selon la revendication 2, dans lequel la dynamique (k) à donner au véhicule hybride est choisie parmi divers profils d'accélération/décélération objectifs (A$_{obj}$) possibles : profil d'accélération/décélération objectif constant ($A_{obj}$), profil d'accélération/décélération objectif ($A_{obj}$) égal à zéro et profil d'accélération/décélération objectif à vitesse constante ($A_{obj}$) à trou de couple d'entraînement (C) réduit.

EP 2 862 770 B1

**EP 2 862 770 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2014499 A